(19) Europäisches Patentamt
European Patent Office
Office européen des brevets

(11) Publication number: **0 133 717**
**B1**

(12) **EUROPEAN PATENT SPECIFICATION**

(45) Date of publication of patent specification: **24.08.88**

(21) Application number: **84201054.8**

(22) Date of filing: **12.07.84**

(51) Int. Cl.$^4$: **C 07 F 9/165**, C 07 F 9/24, C 07 F 9/32, C 07 F 9/40, A 01 N 57/02

(54) **Pesticidal phosphorodithioic compounds.**

(30) Priority: **05.08.83 US 520882**
**05.08.83 US 520883**

(43) Date of publication of application:
**06.03.85 Bulletin 85/10**

(45) Publication of the grant of the patent:
**24.08.88 Bulletin 88/34**

(84) Designated Contracting States:
**AT BE CH DE FR GB IT LI LU NL SE**

(56) References cited:
**FR-A-2 084 287**
**FR-A-2 100 471**

**The file contains technical information submitted after the application was filed and not included in this specification**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Sanborn, James Russell**
**5612 Chenault Drive**
**Modesto California (US)**

(74) Representative: **Hunter, Keith Roger Ian et al**
**4 York Road**
**London SE1 7NA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 133 717 B1

**Description**

The present invention relates to novel phosphorodithioic compounds, their preparation, their use as pesticides and pesticidal compositions containing them.

Certain cyano substituted phosphoric, phosphonic and phosphinic esters are known broadly as pesticides. For example U.S. Patents US—A—2,908,604 and US—A—3,706,280 and German patent DE—A—1,196,188 disclose various phosphorus compounds useful against insects and sometimes other pests, such as mites.

It has now been discovered that certain phosphorodithioic compounds of formula I have high pesticidal activity.

The present invention therefore provides a compound of the general formula

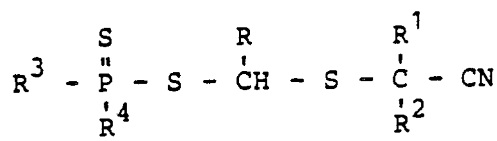
(I)

in which R is a hydrogen atom, a methyl group or an ethyl group; $R^1$ is a methyl, ethyl, monochloromethyl or monobromomethyl group; $R^2$ is a methyl or ethyl group; or $R^1$ and $R^2$ together with the carbon atom to which they are attached form a cyclopropyl group; and each of R and $R^4$ independently is an alkyl, alkoxy, monoalkylamino group, in which the or each alkyl moiety has 1 to 4 carbon atoms; provided that if $R^1$ represents a monochloromethyl or monobromomethyl group, then R represents a methyl or ethyl group.

Preferably R is a methyl group.

Preferably $R^1$ is a methyl or a monochloromethyl group, and preferably $R^2$ is a methyl group, or $R^1$ and $R^2$ together with the carbon atom to which they are attached represent a cyclopropyl group.

Preferably each of $R^3$ and $R^4$ independently represents an alkoxy group having 1 or 2 carbon atoms. Preferably both of $R^3$ and $R^4$ are ethoxy groups.

Typical compounds of the invention are those named in the Examples herein and also the following:

S-(1-(1-cyano-1-(chloromethyl)ethylthio)ethyl O-ethyl N-isopropylphosphoramidodithioate,
S-(1-(1-cyano-1-(chloromethyl)propylthio)ethyl O,O-diethyl phosphorodithioate,
S-(1-(1-cyano-1-(bromomethyl)ethylthio)ethyl) O-ethyl N,N-diethylphosphoramidodithioate,
S-(1-(1-cyanocyclopropylthio)ethyl O-ethyl N-isopropylphosphoramidodithioate,
S-(1-(1-cyano-1-ethylpropylthio)ethyl O,O-diethylphosphorodithioate
S-(1-(1-cyano-1-methylethylthio)ethyl O-ethyl N,N-diethylphosphoramidodithioate,
O,O-diethyl S-(1-(1-cyano-1-(chloromethyl)ethylthio)propyl) phosphorodithioate,
O,O-diethyl S-(1-(1-cyano-1-(bromomethyl)ethylthio)ethyl) phosphorodithioate

The invention further provides a process for the preparation of a compound according to the invention, which comprises reacting a compound of the general formula

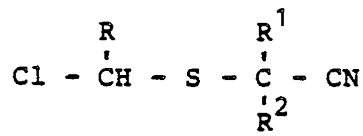
(II)

with a salt of an acid of the general formula

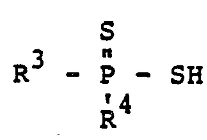
(III)

in which R, $R^1$, $R^2$, $R^3$ and $R^4$ have the meanings given for the general formula I; or, when $R^3$ represents a C(1—4) alkoxy group or a mono- or dialkylamino group and $R^4$ represents a mono- or dialkylamino group, reacting a compound of the general formula

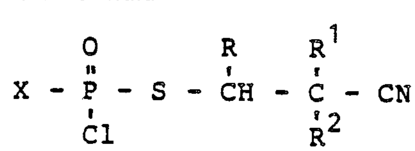
(IV)

where R, $R^1$ and $R^2$ have the meanings for the formula I and X represents a C(1—4) alkoxy group or a chlorine atom, with a compound of the formula $R^4H$ followed by alkaline hydrogen sulphide.

The compounds of general formula II may be prepared by chlorination of corresponding compounds of the general formula

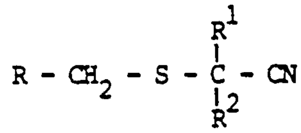

(V)

using any suitable chlorinating agent, for example N-chlorosuccinimide or sulphuryl chloride, by methods analogous to known methods.

The compounds of the invention have useful pesticidal activity, for example against insects, mites, and nematodes. They are especially useful for the control of soil pests, including soil insects and nematodes. The invention therefore also provides a pesticidal composition which comprises as active ingredient a compound of formula I, together with a carrier. The invention also provides a method of combating pests at a locus, which comprises applying to that locus a compound of formula I or a pesticidal composition according to the invention. The compounds of the invention have unusually good larvicidal activity.

For use as soil pesticides, the compounds of the invention are suitably applied to the soil at a rate of from about 0.1 to about 10 kg/ha, preferably from about 0.1 to about 5 kg/ha, especially from about 0.1 to about 4 kg/ha. Especially effective control results when a solid formulation is lightly mixed with the topsoil. The mixing may be preceded or immediately followed by planting seeds which germinate into plants. The compounds of the invention can also be applied as a drench, that is as a solution or dispersion of compounds of the invention.

A carrier in a composition according to the invention is any material with which the active ingredient is formulated to facilitate application to the locus to be treated, which may for example be a plant, seed or soil, or to facilitate storage, transport or handling. A carrier may be a solid or a liquid, including a material which is normally gaseous but which has been compressed to form a liquid, and any of the carriers normally used in formulating agrochemical compositions may be used. Preferably compositions according to the invention contain 0.5 to 95% by weight of active ingredient.

Suitable solid carriers include natural and synthetic clays and silicates, for example natural silicas such as diatomaceous earths; magnesium silicates, for example talcs; magnesium aluminium silicates, for example attapulgites and vermiculites; aluminium silicates, for example kaolinites, montomorillonites and micas; calcium carbonate; calcium sulphate; ammonium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes; ans solid fertilisers, for example superphosphates.

Suitable liquid carriers include water; alcohols, for example isopropanol and glycols; ketones, for example acetone, methyl ethyl ketone, methyl isobutyl ketone and cyclohexanone; ethers; aromatic or aliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Agricultural compositions are often formulated and transported in a concentrated form which is subsequently diluted by the user before application. The presence of small amounts of a carrier which is a surface-active agent facilitates this process of dilution. Thus preferably at least one carrier in a composition according to the invention is a surface-active agent. For example the composition may contain at least two carriers, at least one of which is a surface-active agent.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols for example *p*-octylphenol or *p*-octylcresol, with ethylene oxide and/or propylene oxide; sulphates or sulphonates of these condensation products; alkali or alkaline earth metal salts, preferably sodium salts, or sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 or 75% w of active ingredient and usually contain in addition to solid inert carrier, 3—10% w of a dispersing agent and, where necessary, 0—10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing $\frac{1}{2}$—10% w of active ingredient. Granules are usually prepared to have a size between 10 and 100 BS mesh (1.676—0.152 mm), and may be manufactured by agglomeration or impregnation techniques. Generally, granules will contian $\frac{1}{2}$—75% w active ingredient and 0—10% w of additives such as stabilisers, surfactants, slow release modifiers and binding agents. The so-called "dry flowable powders" consist of relatively small granules having a relatively high concentration

of active ingredient. Emulsifiable concentrates usually contain, in addition to a solvent and, when necessary, co-solvent, 10—50% w/v active ingredient, 2—20% w/v emulsifiers and 0—20% w/v of other additives such as stabilisers, penetrants and corrosion inhibitors. Suspension concentrates are usually compounded so as to obtain a stable, non-sedimenting flowable product and usually contain 10—75% w active ingredient, 0.5—15% w of dispersing agents, 0.1—10% w of suspending agents such as protective colloids and thixotropic agents, 0—10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as anti-freeze agents for water.

Aqueous dispersions and emulsions, for example compositions obtained by diluting a wettable powder or a concentrate according to the invention with water, also lie within the scope of the invention. The said emulsions may be of the water-in-oil or of the oil-in-water type, and may have a thick 'mayonnaise'-like consistency.

The composition of the invention may also contain other ingredients, for example other compounds possessing pesticidal, herbicidal, or fungicidal properties.

The following Examples illustrate the invention. The NMR figures given are δ values in ppm relative to tetramethylsilane in $CDCl_3$.

Example 1

O,O-Diethyl S-(1-(1-Cyano-1-methylethylthio)ethyl) Phosphorodithioate

To 3.6 g of sodium hydride (7.2 g of a 50% dispersion washed with hexane) suspended in 50 ml of dimethylformamide was added a solution of 17.5 g of ethyl mercaptan in 5 ml of dimethylformamide. The reaction mixture was stirred for 20 min at ambient temperature and then 22.2 g of 2-bromo-2-methylpropanenitrile in 10 ml of dimethylformamide was added while maintaining the temperature below 23°C. The reaction mixture was stirred at ambient temperature for 2.5 hours, allowed to stand overnight, then poured into water and extracted with hexane. The extract was dried over $MgSO_4$, the solvent was removed and the residue was vacuum distilled to give 3.4 g of 2-ehtylthio-2-methylpropanenitrile, b.p. 95°C (35 mm).

In 10 ml of carbon tetrachloride were placed 1.4 g of this product and 1.5 g of N-chlorosuccinimide and the mixture was refluxed with stirring for four hours. Solid was filtered and the filtrate was evaporated to give 1.8 g of a yellow liquid. This product was used without purification.

To 15 ml of acetonitrile were added successively 2.24 g of O,O-diehtyl ammonium phosphorodithioate and 1.8 g of the above crude 2-(1-chloroethylthio)-2-methylpropanenitrile. The reaction mixture was stirred overnight at ambient temperature, poured into water, and extracted with hexane. The hexane solution was washed with aqueous sodium bicarbonate, and then dried ($MgSO_4$). Removal of the solvent gave 3.0 g of a-yellow oil, which was chromatographed over silica gel to yield 0.6 g of product.

NMR Analysis: 1.40, t, 6H; 2.00, m, 9H; 4.10—5.10, m, 5H.

Example 2

O,O-Diethyl S(1-(1-Cyano-1-methylpropylthio)ethyl Phosphorodithioate

In 300 ml of tetrahydrofuran under nitrogen was placed 81 ml of 10% lithium diisopropylamide in hexane. The mixture was then cooled to −70°C and 6.7 g of 2-methylbutanenitrile was added. The reaction mixture was stirred and maintained at this temperature for 1 hour and then 9.9 g of diethyldisulphide was slowly added. After 30 minutes, the reaction mixture was allowed to warm to room temperature. Solid was filtered off and the filtrate was evaporated. The resulting residue was dissolved in methylene chloride, washed with water, and dried over $MgSO_4$. Solvent removal gave 6.9 g of 2-ethylthio-2-methylbutanenitrile, b.p. 62—65°C (0.85 mm).

In 150 ml of dichloromethane was placed 4.3 g of this product. After cooling to 10°C, 4.05 g of sulphuryl choride was added dropwise. The reaction mixture was stirred at room temperature overnight. The solvent was removed to give 5.33 g of product, which was used without purification.

In 50 ml of dichloromethane were placed 5.59 g of 0,0-diethyl hydrogen phosphorodithioate and 3.18 g of sodium carbonate. This mixture was stirred at room temperature for 45 minutes and then 5.33 g of the above product, 2-(1-chloroethyl-2-methylbutanenitrile, was added. After stirring for 3 days at room temperature, the reaction mixture was washed successively with 1M sodium bicarbonate and water, dried ($MgSO_4$) and distilled under reduced pressure to give 6.9 g of product, b.p. 135—140°C (0.05 mm).

NMR Analysis: 1.00—1.50, m, 12H; 1.65—2.10, m, 5H; 4.00—4.40, m, 4H; 4.40—5.00, m, 1H.

Example 3

S-(1-(1-Cyano-1-(chloromethyl)ethylthio)ethyl)-O,O-Diethyl Phosphorodithioate

In 150 ml of dichloromethane were placed 30.5 g of diethyl disulphide. After cooling to −50° to −60°C, 20.0 ml of sulphuryl chloride was added dropwise and then the reaction mixture was stirred at −30°C for two hours. Then 32.5 g of methacrylonitrile was added dropwise and the reaction mixture was allowed to warm to room temperature. The solvent was removed adn the residue was distilled to give 65 g of 3-chloro-2-(ethylthio)-2-methylpropanenitrile, b.p. 71.5—72.5°C (0.8 mm).

In 50 ml of methylene chloride were placed 16.3 g of this product. This solution was cooled to 5°C and 13.5 g of sulphuryl chloride was added dropwise. The reaction mixture was allowed to warm to room

temperature. The solvent was removed and the residue was distilled at 67°C (0.07 mm) to give 13.5 g of 3-chloro-2-(1-chloroethylthio)-2-methylpropanenitrile.

In 25 ml of methylene chloride were placed 3.72 g of O,O-diethyl phosphorodithioic acid and 1.05 g of powdered sodium carbonate. The mixture was stirred for 1 hour and then 1.98 g of 3-chloro-2-(1-chloroethylthio)-2-methylpropanenitrile was added. The reaction mixture was stirred for 8 hours at room temperature and filtered. The filtrate was dried ($NaSO_4$) and the solvent was removed to give 3.5 g of crude material, and volatiles were removed by heating at 130°C at 0.05 mm to give 2.5 g of product.

NMR Analysis: 1.37, t, 6H; 1.85, m, 6H; 3.80, s, 2H; 4.20—4.70, m, 5H.

Examples 4 to 6

By methods analogous to those described in Examples 1 to 3, further compounds of the general formula I were prepared. Details are given in Table I.

Table 1

| Example No. | In the General Formula I | | | | | NMR Analysis |
|---|---|---|---|---|---|---|
| | R | $R^1$ | $R^2$ | $R^3$ | $R^4$ | |
| 4 | $C_2H_5$ | $CH_3$ | $CH_3$ | $C_2H_5$ | $C_2H_5$ | 1.05-1.65, m, 9H; 1.80-2.2, m, 8H; 4.05-4.98, m, 5H. |
| 5 | H | $CH_3$ | $CH_3$ | $C_2H_5$ | $C_2H_5$ | 1.38, t, 6H; 1.70, s, 6H; 3.90-4.00, m, 6H. |
| 6 | $CH_3$ | $-CH_2CH_2-$ | | $C_2H_5$ | $C_2H_5$ | 1.08-1.71, m, 10H; 1.72-1.98, d, 3H; 3.95-4.95, m, 5H. |

Example 7

Pesticidal Activity

Activity of the compounds of this invention with respect to insect and acarine pests was determined as follows. In each test, a solution of the test compound in acetone containing an emulsifier, was diluted with water to give test solutions of various different dosages.

I. Pea aphids (*Acyrthosiphon pisum* (Harris)) were tested by placing about 100 aphids on broad bean plants. The plants were sprayed with solutions of test compound and held in containers under laboratory conditions for 18 to 20 hours at which time the living aphids in the containers were counted.

II. Adult female two-spotted spider mites (*Tetranychus urticae* (Koch)) were tested by placing 50—75 mites on the bottom side of leaves of pinto bean plants. The leaves were sprayed with solutions of test compound and kept under laboratory conditions for about 20 hours at which time mortality counts were made.

In each instance, the toxicity of the compound of the invention was compared to that of a standard pesticide (Parathion), its relative toxicity then being expressed in terms of the relationship between the amount of compound of the invention and the amount of the standard pesticide required to produce the same percentage (50) of mortality in the test insect or acarine. By assigning the standard pesticide an arbitrary rating of 100, the toxicities of the compounds of the invention were expressed in terms of toxicity indices, which compare the toxicity of the compounds of the invention with that of the standard pesticide. That is to say, a test compound having a Toxicity Index of 50 would be half as active, while one having a Toxicity Index of 200 would be twice as active as the standard pesticide. The Toxicity Indices are given in Table 2.

Table 2

Pesticidal activity expressed as toxicity index relative to that of parathion as a standard equal to 100

| Compound of Example No. | Pea Aphid | Two-Spotted Spider Mite |
|---|---|---|
| 1 | 66 | 496 |
| 2 | 32 | 106 |
| 3 | 28 | 112 |
| 4 | 56 | 438 |
| 5 | 1750 | 3192 |
| 6 | 318 | 1708 |

Example 8

Soil Activity

The test chemical was dissolved in a solvent and thoroughly incorporated into dry soil. After venting traces of solvent, the soil moisture level was brought to 9% by adding water.

Sixty grams of the moist soil was added to a wide-mouthed jar. Two sweet corn seeds, which had been surface sterilized in 0.2% sodium hypochlorite solution for 15 minutes and rinsed with water, were pressed into the soil perimeter of the jar. A small cavity was opened in the surface of the soil and 20 *Diabrotica undecempunctata undecempunctata* Mannerheim (western spotted cucumber beetle) eggs were placed in the well, and covered over with fine-sieved vermiculite. The jar was then capped with a lid into which two holes had been drilled for ventilation. The jars were held under lamps at 27°C.

After one week, the jar contents were examined for the presence of live larvae and their number was recorded. Compounds showing control at 3 ppm or lower in the first week were evaluated at subsequent weeks. Activity at 3 ppm indicated useful soil insecticidal activity.

Results of these tests were evaluated as follows:

| Rating | Larval Count |
|---|---|
| 0 | 0 |
| 1 | >0 to <3 |
| 2 | >3 to <6 |
| 3 | >6 to <10 |
| 4 | >10 |

Results of tests with compounds of the present invention are shown in Table 3 below.

Table 3

Control of Diabrotica Undecempunctata Undecempunctata larvae in soil

| Embodiment | Dosage Rate (ppm) | Weeks after Treatment 0 | 2 | 4 | 8 |
|---|---|---|---|---|---|
| 1 | 3.0 | 0 | 0 | 0 | 0 |
| | 1.0 | 0 | 0 | 0 | 0 |
| | 0.3 | 0 | 0 | 1 | 4 |
| 2 | 3.0 | 0 | 0 | 0 | 0 |
| | 1.0 | 0 | 0 | 0 | 0 |
| | 0.3 | 0 | 4 | 1 | 4 |
| 3 | 3.0 | 0 | 0 | 0 | 0 |
| | 1.0 | 0 | 0 | 0 | 0 |
| | 0.3 | 2 | 3 | 3 | 3 |
| 4 | 3.0 | 0 | 0 | 0 | 0 |
| | 1.0 | 0 | 0 | 1 | 3 |
| | 0.3 | 3 | 4 | - | - |
| 5 | 3.0 | 0 | 0 | 4 | - |
| | 1.0 | 0 | 4 | - | - |
| | 0.3 | 0 | 4 | - | - |
| 6 | 3.0 | 0 | 0 | 0 | 0 |
| | 1.0 | 0 | 0 | 1 | 1 |
| | 0.3 | 1 | 3 | 4 | - |

## Claims

1. A compound of the general formula

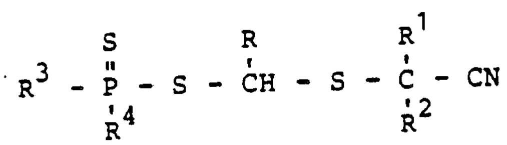

(I)

in which R is a hydrogen atom, a methyl group or an ethyl group; $R^1$ is a methyl, ethyl, monochloromethyl or monobromomethyl group; $R^2$ is a methyl or ethyl group; or $R^1$ and $R^2$ together with the carbon atom to which they are attached form a cyclopropyl group; and each of $R^3$ and $R^4$ independently is an alkyl, alkoxy, monoalkylamino or dialkylamino group, in which the or each alkyl moiety has 1 to 4 carbon atoms; provided that if $R^1$ represents a monochloromethyl or monobromomethyl groiup, then R represents a methyl or ethyl group.

2. A compound as claimed in claim 1, in which R is a methyl group.

3. A compound as claimed in either claim 1 or claim 2, in which $R^1$ is a methyl or monochloromethyl group and $R^2$ is a methyl group, or $R^1$ and $R^2$ together with the carbon atom to which they are attached represent a cyclopropyl group.

4. A compound as claimed in any one of claims 1 to 3, in which each of $R^3$ and $R^4$ independently represents an alkoxy group having 1 or 2 carbon atoms.

5. A process for the preparation of a compound as claimed in claim 1, which comprises reacting a compound of the general formula

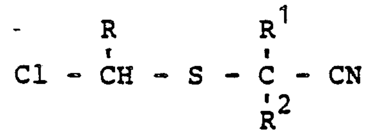 (II)

with a salt of an acid of the general formula

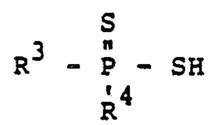 (III)

in which R, $R^1$, $R^2$, $R^3$ and $R^4$ have the meanings given for the general formula I; or, when $R^3$ represents a C(1—4) alkoxy group or a mono- or dialkylamino group and $R^4$ represents a mono- or dialkylamino group, reacting a compound of the general formula

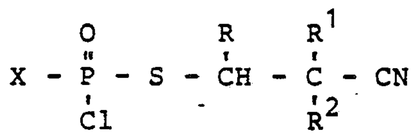 (IV)

where R, $R^1$ and $R^2$ have the meanings for the formula I and X represents a C(1—4) alkoxy group or a chlorine atom, with a compound of the formula $R^4H$ followed by alkaline hydrogen sulphide.

6. A pesticidal composition which comprises a compound as claimed in any one of claims 1 to 4 together with a carrier.

7. A composition as claimed in claim 6, which comprises at least two carriers, at least one of which is a surface active agent.

8. A method of combating pests at a locus, which comprises applying to that locus a compound as claimed in any one of claims 1 to 4, or a composition as claimed in either claim 6 or claim 7.

9. A method as claimed in claim 8, in which the locus is soil.

**Patentansprüche**

1. Verbindung der allgemeinen Formel

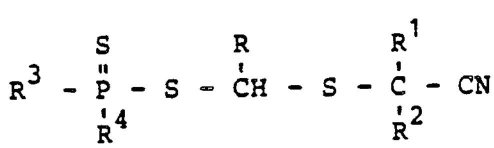 (I)

worin R ein Wasserstoffatom, eine Methylgruppe oder eine Ethylgruppe bedeutet; $R^1$ eine Methylgruppe, Ethylgruppe, Monochlormethylgruppe oder Monobrommethylgruppe darstellt; $R^2$ eine Methyl- oder Ethylgruppe bedeutet; oder $R^1$ und $R^2$ gemeinsam mit dem Kohlenstoffatom, an welches sie gebunden sind, eine Cyclopropylgruppe ausbilden; und jeder der Reste $R^3$ und $R^4$ unabhängig voneinander eine Alkylgruppe, Alkoxygruppe, Monoalkylaminogruppe oder Dialkylaminogruppe bedeutet, worin der oder jeder Alkylteil 1 bis 4 Kohlenstoffatome aufweist; mit der Maßgabe, daß dann, wenn $R^1$ eine Monochlormethylgruppe oder Monobrommethylgruppe bedeutet, R eine Methylgruppe oder Ethylgruppe darstellt.

2. Verbindung nach Anspruch 1, worin R eine Methylgruppe bedeutet.

3. Verbindung nach Anspruch 1 oder 2, worin $R^1$ eine Methyl- oder Monochlormethylgruppe darstellt und $R^2$ eine Methylgruppe bedeutet, oder $R^1$ und $R^2$ zusammen mit dem Kohlenstoffatom, an welches sie gebunden sind, eine Cyclopropylgruppe darstellen.

4. Verbindung nach einem der Ansprüche 1 bis 3, worin jeder Rest $R^3$ und $R^4$ unabhängig voneinander eine Alkoxygruppe mit 1 oder 2 Kohlenstoffatomen bedeutet.

5. Verfahren zur Herstellung einer Verbindung nach Anspruch 1, welches ein Umsetzen einer Verbindung der allgemeinen Formel

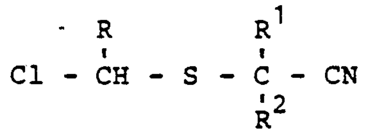

(II)

mit einem Salz einer Säure der allgemeinen Formel

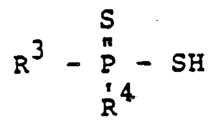

(III)

worin R, $R^1$, $R^2$, $R^3$ und $R^4$ die für die allgemeine Formel I angegebenen Bedeutungen besitzen; oder, wenn $R^3$ eine C(1—4)Alkoxygruppe oder eine Mono- oder Dialkylaminogruppe bedeutet und $R^4$ eine Mono- oder Dialkylaminogruppe darstellt, ein Umsetzen einer Verbindung der allgemeinen Formel

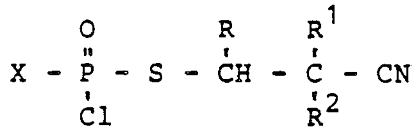

(IV)

worin R, $R^1$ und $R^2$ die für die Formel I angegebenen Bedeutungen aufweisen und X eine C(1—4)-Alkoxygruppe oder ein Chloratom bedeutet, mit einer Verbindung der Formel $R^4H$ und anschließend mit Alkalihydrogensulfid umfaßt.

6. Pestizide Zusammensetzung, welche eine Verbindung nach einem der Ansprüche 1 bis 4 zusammen mit einem Träger umfaßt.

7. Zusammensetzung nach Anspruch 6, welche wenigstens zwei Träger umfaßt, von denen wenigstens einer ein oberflächenaktives Mittel ist.

8. Verfahren zur Bekämpfung von Schädlingen an einem Ort, welches ein Aufbringen einer Verbindung nach einem der Ansprüche 1 bis 4 oder einer Zusammensetzung nach Anspruch 6 oder Anspruch 7 auf diesen Ort umfaßt.

9. Verfahren nach Anspruch 8, worin der Ort ein Boden ist.

**Revendications**

1. Un composé de la formule générale

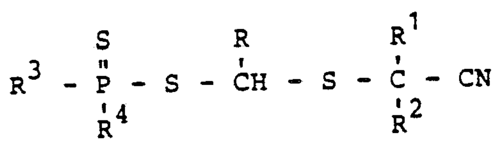

(I)

où R est un atome d'hydrogène, un groupe méthyle ou un groupe éthyle; $R^1$ est un groupe méthyle, éthyle, monochlorométhyle ou monobromométhyle; $R^2$ est un groupe méthyle ou éthyle; ou $R^1$ et $R^2$ en même temps que l'atome de carbone auquel ils sont attachés forment un groupe cyclopropyle; et chacun de $R^3$ et $R^4$ indépendamment est un groupe alcoyle, alcoxy, monoalcoylamino ou dialcoylamino, dans lequel la ou chaque portion alcoyle a 1 à 4 atomes de carbone; avec la condition que si $R^1$ représente un groupe monochlorométhyle ou monobromométhyle, alors R représente un groupe méthyle ou éthyle.

2. Un composé selon la revendication 1, dans lequel R est un groupe méthyle.

3. Un composé selon la revendication 1 ou la revendication 2, dans lequel $R^1$ est un groupe méthyle ou monochlorométhyle et $R^2$ est un groupe méthyle, ou $R^1$ et $R^2$ en même temps que l'atome de carbone auquel ils sont attachés représente un groupe cyclopropyle.

4. Un composé selon l'une quelconque des revendications 1 à 3, dans lequel chacun de $R^3$ et $R^4$ indépendamment représente un groupe alcoxy ayant 1 ou 2 atomes de carbone.

5. Un procédé pour la préparation d'un composé tel que revendiqué dans la revendication 1, qui comprend la réaction d'un composé de la formule générale

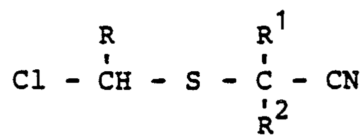

(II)

avec un sel d'un acide de la formule générale

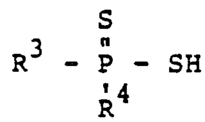

(III)

où R, $R^1$, $R^2$, $R^3$ et $R^4$ ont les significations indiquées pour la formule générale I; ou, quand $R^3$ représente un groupe alcoxy en $C_{1-4}$ ou un groupe mono- ou dialcoylamino et $R^4$ représente un groupe mono- ou dialcoylamino, la réaction d'un composé de la formule générale

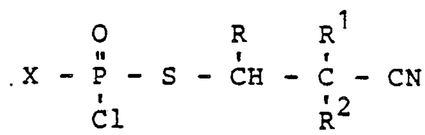

(IV)

où R, $R^1$ et $R^2$ ont les significations indiquées pour la formule I et Q représente un groupe alcoxy en $C_{1-4}$ ou un atome de chlore, avec un composé de la formule $R^4H$ et ensuite avec du sulfure d'hydrogène alcalin.

6. Une composition pesticide qui comprend un composé selon l'une quelconque des revendications 1 à 4 en même temps qu'un véhicule.

7. Une composition selon la revendication 6, qui comprend au moins deux véhicules, dont au moins un est un agent tensio-actif.

8. Une méthode de lutte contre des organismes nuisibles en un lieu, qui comprend l'application à ce lieu d'un composé selon l'une quelconque des revendications 1 à 4 ou d'une composition selon la revendication 6 ou la revendication 7.

9. Une méthode selon la revendication 8, dans laquelle le lieu est de la terre.